# EUROPEAN PATENT APPLICATION

(11) **EP 4 661 249 A1**
(43) Date of publication of application: **10.12.2025**
(21) Application number: 23919917.7
(22) Date of filing: 06.12.2023
(51) Int. Cl.: H02J 50/80, B60L 5/00, B60L 53/12, B60M 7/00, H02J 50/12, H02J 50/40, H02J 50/90

(54) **CONTROL DEVICE**

(30) Priority: 31.01.2023 JP 2023012748
(71) Applicant: TOYOTA JIDOSHA KABUSHIKI KAISHA, Toyota-shi Aichi 471-8571 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP)
(74) Representative: Cabinet Beau de Loménie
(86) International application number: PCT/JP2023/043666
(87) International publication number: WO 2024/161782

(57) **Abstract**

A control device includes, in a wireless power transfer system that transfers power from supply equipment to a traveling vehicle in a non-contact manner by using narrow-area wireless communication and wide-area wireless communication, a processor configured to set interruption determination time of determining that communication of the wide-area wireless communication is interrupted to be shorter in a case where it is determined that a distance between the vehicle and the supply equipment is equal to or less than a threshold on the basis of position information of the vehicle than in a case where the distance between the vehicle and the supply equipment is longer than the threshold. As a result, the control device capable of promptly detecting the interruption of the wide-area wireless communication is provided.

## Description

### Field

The present disclosure relates to a control device.

### Background

Patent Literature 1 discloses that, in a non-contact power feeding system capable of transmitting information between a power transmission device and a power reception device by wireless communication, a communication unit that performs wireless communication switches a communication range between a wide communication range (wide-area communication) and a narrow communication range (narrow-area communication).

### Citation List

### Patent Literature

Patent Literature 1: Japanese Patent Application Laid-open No. 2013-240132

### Summary

### Technical Problem

In a case where power is fed while the vehicle is traveling, it is necessary to exchange information such as a vehicle ID, requested power, billing, vehicle specifications, and a vehicle position, and high-speed and large-capacity communication is required. Thus, it has been required to promptly detect interruption of wide-area wireless communication during the power feeding.

The present disclosure has been made in view of the above, and is to provide a control device capable of promptly detecting interruption of wide-area wireless communication.

### Solution to Problem

A control device according to the present disclosure in a wireless power transfer system that transfers power from supply equipment to a traveling vehicle in a non-contact manner by using narrow-area wireless communication and wide-area wireless communication, includes: a processor configured to set interruption determination time for determining that communication of the wide-area wireless communication is interrupted when determining that a distance between the vehicle and the supply equipment is equal to or less than a threshold to be shorter than the interruption determination time when determining that the distance between the vehicle and the supply equipment is longer than the threshold, on a basis of position information of the vehicle.

### Advantageous Effects of Invention

According to the present disclosure, it is possible to promptly detect interruption of the wide-area wireless communication.

### Brief Description of Drawings

FIG. 1 is a schematic diagram illustrating a wireless power transfer system including a control device in an embodiment.
FIG. 2 is a view illustrating an overall configuration of the wireless power transfer system.
FIG. 3 is a schematic diagram for describing wide-area wireless communication in the wireless power transfer system.
FIG. 4 is a block diagram for describing a functional configuration of a power transmission ECU.
FIG. 5 is a block diagram for describing a functional configuration of a vehicle ECU.
FIG. 6 is a view for describing a power transfer process.
FIG. 7 is a sequence diagram illustrating a case where communication using the wide-area wireless communication is performed between a vehicle and a supply device.
FIG. 8 is a sequence diagram illustrating an operation after power feeding from the supply device to the vehicle during traveling is terminated.
FIG. 9 is a flowchart illustrating processing executed by the control device.

### Description of Embodiments

A wireless power transfer system including a control device in an embodiment of the present invention will be described specifically in the following. Note that the present invention is not limited to the embodiment described in the following.

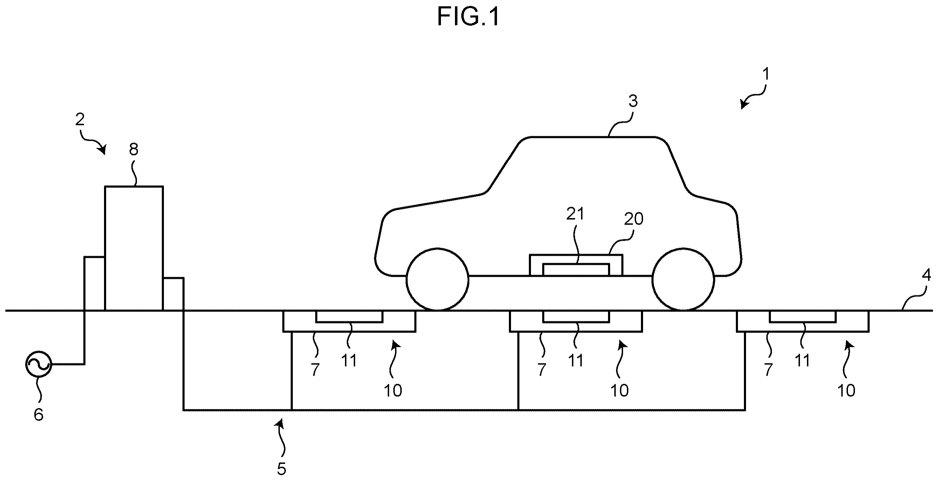

FIG. 1 is a schematic diagram illustrating the wireless power transfer system including the control device in the embodiment. A wireless power transfer system 1 includes supply equipment 2 and a vehicle 3. The supply equipment 2 is equipment that supplies power to the traveling vehicle 3 in a non-contact manner. The vehicle 3 is an electric vehicle that can be charged with power supplied from an external power supply, and is, for example, a battery electric vehicle (BEV), a plug-in hybrid electric vehicle (PHEV), or the like.

The wireless power transfer system 1 performs a wireless power transfer from the supply equipment 2 to the vehicle 3 by magnetic field resonance coupling (magnetic field resonance). The wireless power transfer system 1 transfers power from the supply equipment 2 to the vehicle 3 traveling on a road 4 in a non-contact manner. That is, the wireless power transfer system 1 transfers power by a magnetic field resonance system, and realizes power feeding to the vehicle 3 during traveling by using the magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The supply equipment 2 includes a supply device 5, and an AC power supply 6 that supplies power to the supply device 5. The supply device 5 transfers the power supplied from the AC power supply 6 to the vehicle 3 in the non-contact manner. The AC power supply 6 is, for example, a commercial power supply. The supply device 5 includes a power transmission device 10 having a primary coil 11.

The supply device 5 includes a segment 7 including the primary coil 11, and a management device 8 that manages the segment 7. The segment 7 is embedded in a lane of the road 4. The management device 8 is installed beside the road 4. The segment 7 is electrically connected to the management device 8. The management device 8 is electrically connected to the AC power supply 6, and supplies the power of the AC power supply 6 to the segment 7. The segment 7 is electrically connected to the AC power supply 6 via the management device 8. A plurality of the segments 7 can be arranged along the lane of the road 4. For example, as illustrated in FIG. 1, the supply device 5 includes three segments 7 installed side by side along the lane in the road 4, and one management device 8 to which the three segments 7 are connected. Each of the segments 7 has a function of transferring power from the supply device 5 to the vehicle 3 in the non-contact manner. The management device 8 has a function of controlling the wireless power transfer in the segment 7.

The vehicle 3 includes a power reception device 20 having a secondary coil 21. The power reception device 20 is provided at a bottom of a vehicle body of the vehicle 3. When the vehicle 3 travels on the road 4 on which the primary coil 11 is installed, the primary coil 11 on a ground side and the secondary coil 21 on a vehicle side face each other in a vertical direction. The wireless power transfer system 1 transfers power from the primary coil 11 of the power transmission device 10 to the secondary coil 21 of the power reception device 20 in the non-contact manner while the vehicle 3 is traveling on the road 4.

Traveling in this description means a state in which the vehicle 3 is located on the road 4 for traveling. The traveling includes a state in which the vehicle 3 is temporarily stopped on the road 4. For example, a state in which the vehicle 3 is stopped on the road 4 to wait for a traffic light to change is also included in traveling. On the other hand, even when the vehicle 3 is located on the road 4, for example, in a case where the vehicle 3 is parked/stopped, the state is not included in traveling.

In addition, in this description, a lane in which the primary coils 11 (segments 7) are embedded may be referred to as a D-WPT lane, and a place which is a partial section of the road 4 and in which the wireless power transfer by the supply device 5 can be performed may be referred to as a D-WPT charging site. In the D-WPT lane and the D-WPT charging site, the plurality of primary coils 11 (plurality of segments 7) is installed side by side in a traveling direction of the vehicle 3 over a predetermined section of the road 4.

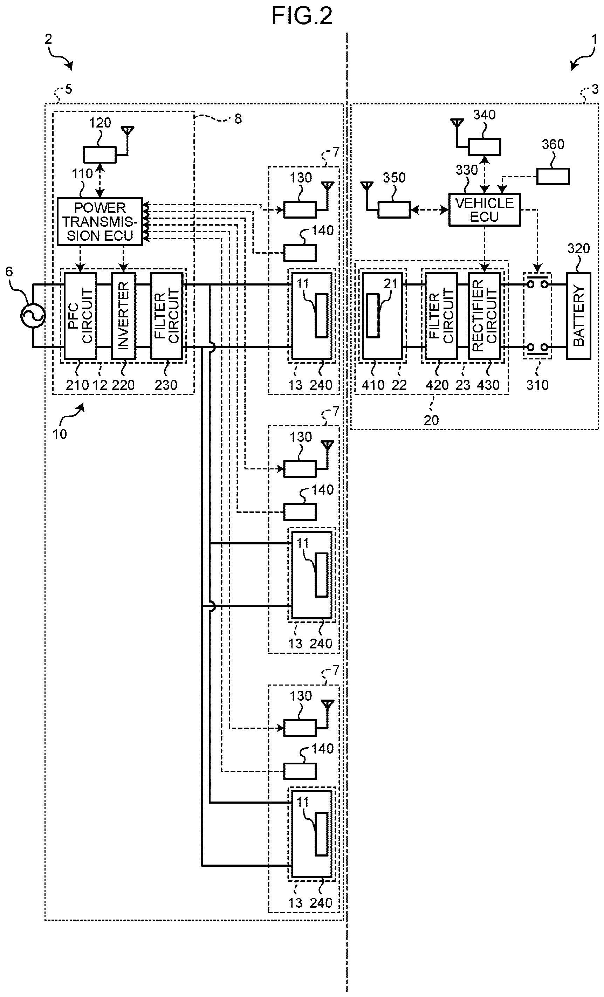

FIG. 2 is a view illustrating an overall configuration of the wireless power transfer system. In the supply equipment 2, the supply device 5 and the AC power supply 6 are electrically connected. In the supply device 5, the segments 7 and the management device 8 are electrically connected.

The supply device 5 includes a configuration provided in the management device 8 and a configuration provided in each of the segments 7. The supply device 5 includes the power transmission device 10, a power transmission electronic control unit (ECU) 110, a first communication device 120, a second communication device 130, and a foreign object detection device 140.

The power transmission device 10 includes an electric circuit connected to the AC power supply 6. The power transmission device 10 includes a power factor collection (PFC) circuit 210, an inverter (INV) 220, a filter circuit 230, and a transmission-side resonant circuit 240.

The PFC circuit 210 improves a power factor of AC power input from the AC power supply 6, converts the AC power into DC power, and performs an output thereof to the inverter 220. The PFC circuit 210 includes an AC/DC converter. The PFC circuit 210 is electrically connected to the AC power supply 6.

The inverter 220 converts the DC power input from the PFC circuit 210 into AC power. Each switching element of the inverter 220 includes an insulated gate bipolar transistor (IGBT), a metal-oxide-semiconductor field effect transistor (MOSFET), or the like, and performs a switching operation according to a control signal from the power transmission ECU 110. For example, an operating frequency of the inverter 220 is 85 kHz. The inverter 220 outputs the converted AC power to the filter circuit 230.

The filter circuit 230 removes noise included in an alternating current input from the inverter 220, and supplies the AC power from which the noise is removed to the transmission-side resonant circuit 240. The filter circuit 230 is an LC filter in which a coil and a capacitor are combined. For example, the filter circuit 230 includes a T-type filter in which two coils and one capacitor are arranged in a T-shape. The PFC circuit 210, the inverter 220, and the filter circuit 230 are included in a power conversion unit 12 of the power transmission device 10.

The transmission-side resonant circuit 240 is a power transmission unit that transfers the AC power supplied from the filter circuit 230 to the power reception device 20 in the non-contact manner. When the AC power is supplied from the filter circuit 230 to the transmission-side resonant circuit 240, current flows through the primary coil 11, and a magnetic field for power transmission is generated.

The transmission-side resonant circuit 240 includes the primary coil 11 and a resonant capacitor. The primary coil 11 is a power transmission coil. The resonant capacitor is connected in series to one end of the primary coil 11, and adjusts a resonance frequency of the transmission-side resonant circuit. The resonance frequency is 10 kHz to 100 GHz, and is preferably 85 kHz. For example, the power transmission device 10 is configured in such a manner that the resonance frequency of the transmission-side resonant circuit 240 and the operating frequency of the inverter 220 match. The transmission-side resonant circuit 240 is included in a primary device 13 of the power transmission device 10.

The power transmission device 10 includes the power conversion unit 12 and the primary device 13. The power conversion unit 12 includes the PFC circuit 210, the inverter 220, and the filter circuit 230. The primary device 13 includes the transmission-side resonant circuit 240. The power transmission device 10 has a configuration in which the power conversion unit 12 is provided in the management device 8 and the primary device 13 is provided in each of the segments 7.

In the supply device 5, the power conversion unit 12 of the power transmission device 10, the power transmission ECU 110, and the first communication device 210 are provided in the management device 8, and the primary device 13 of the power transmission device 10, the second communication device 130, and the foreign object detection device 140 are provided in each of the segments 7.

The power transmission ECU 110 is an electronic control device that controls the supply device 5. The power transmission ECU 110 includes a processor and a memory. The processor includes a central processing unit (CPU), a digital signal processor (DSP), a field-programmable gate array (FPGA), and the like. The memory is a main storage device, and includes a random access memory (RAM), a read only memory (ROM), and the like. The power transmission ECU 110 loads a program stored in a storage unit into a work area of the memory (main storage device) and executes the program, controls each configuration unit and the like through the execution of the program, and realizes a function matching a predetermined purpose. The storage unit includes recording media such as an erasable programmable ROM (EPROM), a hard disk drive (HDD), and a removable medium. As the removable media, there are a universal serial bus (USB) memory, and disc recording media such as a compact disc (CD), a digital versatile disc (DVD), and a Blu-ray (registered trademark) disc (BD). The storage unit can store an operating system (OS), various programs, various tables, various databases, and the like. Signals from various sensors are input to the power transmission ECU 110. A signal from the foreign object detection device 140 is input to the power transmission ECU 110. Then, the power transmission ECU 110 executes various kinds of control on the basis of the signals input from the various sensors.

For example, the power transmission ECU 110 executes power control of adjusting power for power transmission. In the power control, the power transmission ECU 110 controls the power transmission device 10. The power transmission ECU 110 outputs a control signal to the power conversion unit 12 in order to control the power supplied from the power conversion unit 12 to the primary device 13. The power transmission ECU 110 adjusts power for power transmission by controlling a switching element included in the PFC circuit 210, and adjusts the power for the power transmission by controlling the switching elements included in the inverter 220.

Furthermore, the power transmission ECU 110 executes communication control of controlling communication with the vehicle 3. In the communication control, the power transmission ECU 110 controls the first communication device 120 and the second communication device 130.

The first communication device 120 is a ground-side communication device that performs wide-area wireless communication. The first communication device 120 performs wireless communication with the vehicle 3, which is before approaching a WPT lane, among vehicles 3 traveling on the road 4. A state before approaching the WPT lane means that the vehicle 3 is at a position where narrow-area wireless communication with the supply device 5 cannot be performed.

The wide-area wireless communication is communication with a communication distance of 10 meters to 10 kilometers. The wide-area wireless communication is communication having a longer communication distance than the narrow-area wireless communication. As the wide-area wireless communication, various kinds of wireless communication having a long communication distance can be used. For example, communication conforming to communication standards such as 4G, LTE, 5G, and WiMAX formulated by 3GPP (registered trademark) and IEEE is used for the wide-area wireless communication. In the wireless power transfer system 1, vehicle information associated with vehicle identification information (vehicle ID) is transmitted from the vehicle 3 to the supply device 5 by utilization of the wide-area wireless communication.

The second communication device 130 is a ground-side communication device that performs the narrow-area wireless communication. The second communication device 130 performs the wireless communication with the vehicle 3 that has approached or entered the WPT lane among the vehicles 3 traveling on the road 4. A state of approaching the WPT lane means that the vehicle 3 is at a position where the narrow-area wireless communication with the supply device 5 can be performed.

The narrow-area wireless communication is communication with a communication distance of less than 10 meters. The narrow-area wireless communication is communication having a shorter communication distance than wide-area wireless communication. As the narrow-area wireless communication, various kinds of short-range wireless communication having a short communication distance can be used. For example, communication conforming to any communication standard formulated by IEEE, ISO, IEC, or the like is used for the narrow-area wireless communication. As an example, Wi-Fi (registered trademark), Bluetooth (registered trademark), ZigBee (registered trademark), and the like are used for the narrow-area wireless communication. Alternatively, as a technique of performing the narrow-area wireless communication, radio frequency identification (RFID), dedicated short range communication (DSRC), or the like may be used. In the wireless power transfer system 1, the vehicle identification information and the like are transmitted from the vehicle 3 to the supply device 5 by utilization of the narrow-area wireless communication.

The foreign object detection device 140 detects a metal foreign object, a living object, or the like present above the primary coil 11. The foreign object detection device 140 includes, for example, a sensor coil, an imaging device, and the like installed on the ground. The foreign object detection device 140 exerts foreign object detection (FOD) and living object protection (LOP) in the wireless power transfer system 1.

In the supply device 5, the configuration of the power transmission device 10 is divided into the segments 7 and the management device 8, and the three segments 7 are connected to the one management device 8. The power transmission device 10 is configured in such a manner that one inverter supplies power to three transmission-side resonant circuits 240. In the supply device 5, a signal from each of the segments 7 is input to the management device 8. Signals from the second communication device 130 and the foreign object detection device 14 provided in the first segment are input to the power transmission ECU 110. Similarly, signals from the second communication device 130 and the foreign object detection device 14 provided in the second segment are input to the power transmission ECU 110. Signals from the second communication device 130 and the foreign object detection device 14 provided in the third segment are input to the power transmission ECU 110. The power transmission ECU 110 can grasp a state of each of the segments 7 on the basis of the signal input from the segment 7.

The vehicle 3 includes the power reception device 20, a charging relay 310, a battery 320, a vehicle ECU 330, a third communication device 340, a fourth communication device 350, and a global positioning system (GPS) receiver 360.

The power reception device 20 supplies the power received from the power transmission device 10 to the battery 320. The power reception device 20 is electrically connected to the battery 320 via the charging relay 310. The power reception device 20 includes a reception-side resonant circuit 410, a filter circuit 420, and a rectifier circuit 430.

The reception-side resonant circuit 410 is a power reception unit that receives power transferred from the power transmission device 10 in the non-contact manner. The reception-side resonant circuit 410 includes a reception-side resonant circuit including the secondary coil 21 and a resonant capacitor. The secondary coil 21 is a power reception coil that receives the power transferred from the primary coil 11 in the non-contact manner. The resonant capacitor is connected in series to one end of the secondary coil 21, and adjusts a resonance frequency of the reception-side resonant circuit. The resonance frequency of the reception-side resonant circuit 410 is determined in such a manner as to match the resonance frequency of the transmission-side resonant circuit 240.

The resonance frequency of the reception-side resonant circuit 410 is the same as the resonance frequency of the transmission-side resonant circuit 240. Thus, when a magnetic field by the transmission-side resonant circuit 240 is generated in a state in which the reception-side resonant circuit 410 faces the transmission-side resonant circuit 240, vibration of the magnetic field is transmitted to the reception-side resonant circuit 410. The primary coil 11 and the secondary coil 21 are brought into a resonance state. When an induced current flows through the secondary coil 21 by electromagnetic induction, induced electromotive force is generated in the reception-side resonant circuit 410. The power transferred from the transmission-side resonant circuit 240 in the non-contact manner in this manner is received by the reception-side resonant circuit 410. Then, the reception-side resonant circuit 410 supplies the power received from the transmission-side resonant circuit 240 to the filter circuit 420. The reception-side resonant circuit 410 is included in a secondary device 22 of the power reception device 20.

The filter circuit 420 removes noise included in an alternating current input from the reception-side resonant circuit 410, and outputs AC power from which the noise is removed to the rectifier circuit 430. The filter circuit 420 is an LC filter in which a coil and a capacitor are combined. For example, the filter circuit 420 includes a T-type filter in which two coils and one capacitor are arranged in a T-shape.

The rectifier circuit 430 converts the AC power input from the filter circuit 420 into DC power and performs an output thereof to the battery 320. The rectifier circuit 430 includes, for example, a full-bridge circuit in which four diodes are full-bridge connected as rectifier elements. A switching element is connected in parallel to each of the diodes of the rectifier circuit 430. Each of the switching elements of the rectifier circuit 430 includes an IGBT, and performs a switching operation according to a control signal from the vehicle ECU 330. The rectifier circuit 430 supplies the converted DC power to the battery 320. The filter circuit 420 and the rectifier circuit 430 are included in a power conversion unit 23 of the power reception device 20.

The power reception device 20 includes the secondary device 22 and the power conversion unit 23. The secondary device 22 includes the reception-side resonant circuit 410. The power conversion unit 23 includes the filter circuit 420 and the rectifier circuit 430.

The charging relay 310 is provided between the rectifier circuit 430 and the battery 320. An open/closed state of the charging relay 310 is controlled by the vehicle ECU 330. The charging relay 310 is controlled to be in the closed state when the battery 320 is charged by the power transmission device 10. In a case where the charging relay 310 is in the closed state, the rectifier circuit 430 and the battery 320 are connected in such a manner as to be energizable. In a case where the charging relay 310 is in the open state, the rectifier circuit 430 and the battery 320 are disconnected from each other in a non-energizable manner. For example, in a case where the charging relay 310 is in the open state, the vehicle 3 does not request power feeding.

The battery 320 is a DC power supply that can be charged, and includes, for example, a lithium ion battery, a nickel-metal hydride battery, or the like. The battery 320 stores the power supplied from the power transmission device 10 to the power reception device 20. In addition, the battery 320 can supply the power to a motor for traveling of the vehicle 3. The battery 320 is electrically connected to the motor for traveling via a power control unit (PCU). The PCU is a power conversion device that converts the DC power of the battery 320 into AC power, and supplies the AC power to the motor for traveling. Each switching element of the PCU includes an IGBT, and performs a switching operation according to a control signal from the vehicle ECU 330.

The vehicle ECU 330 is an electronic control device that controls the vehicle 3. The vehicle ECU 330 has a hardware configuration similar to that of the power transmission ECU 110. Signals from various sensors mounted on the vehicle 3 are input to the vehicle ECU 330. Furthermore, a positioning signal received by the GPS receiver 360 is input to the vehicle ECU 330. The vehicle ECU 330 can acquire current position information of the vehicle 3 from the GPS receiver 360. Then, the vehicle ECU 330 executes various kinds of control on the basis of the signals input from the various sensors.

For example, the vehicle ECU 330 transfers power from the primary coil 11 to the secondary coil 21 in the non-contact manner, and executes non-contact charging control of storing the power received by the secondary coil 21 into the battery 320. In the non-contact charging control, the vehicle ECU 330 controls the rectifier circuit 430, the charging relay 310, the third communication device 340, and the fourth communication device 350. The non-contact charging control includes power control of controlling charging power and communication control of controlling communication with the supply device 5. In the power control, the vehicle ECU 330 controls the switching elements included in the rectifier circuit 430 and adjusts power (charging power) supplied from the power reception device 20 to the battery 320. In the communication control, the vehicle ECU 330 controls the third communication device 340 and the fourth communication device 350.

The third communication device 340 is a vehicle-side communication device that performs the wide-area wireless communication. The third communication device 340 performs the wireless communication with the first communication device 120 of the supply device 5 in a state before the vehicle 3 traveling on the road 4 approaches the WPT lane. The wide-area wireless communication is bidirectional wireless communication. The communication between the first communication device 120 and the third communication device 340 is performed by high-speed wireless communication.

The fourth communication device 350 is a vehicle-side communication device that performs the narrow-area wireless communication. The fourth communication device 350 performs the wireless communication with the second communication device 130 of the supply device 5 in a state in which the vehicle 3 has approached or entered the WPT lane. The narrow-area wireless communication is unidirectional wireless signaling. The unidirectional wireless signaling is point to point signaling (P2PS). P2PS is used to notify the supply device 5 of the vehicle identification information from the vehicle 3 in each of activities of pairing, an alignment check, a magnetic coupling check, a termination of a power transfer, and the termination of power transmission. In addition, P2PS can be used as a means of the alignment check in a lateral direction. The lateral direction is a width direction of the lane and is a width direction of the vehicle 3.

The GPS receiver 360 detects the current position of the vehicle 3 on the basis of positioning information acquired from a plurality of positioning satellites. The current position information of the vehicle 3 which information is detected by the GPS receiver 360 is transmitted to the vehicle ECU 330.

Note that in the supply device 5, the filter circuit 230 may be included in the management device 8 instead of each of the segments 7. That is, a filter 230 may be installed beside the road 4. In this case, the power conversion unit 12 includes the PFC circuit 210, the inverter 220, and the filter circuit 230, and the primary device 23 includes the transmission-side resonant circuit 240.

In addition, the filter circuit 230 may be individually provided in the primary coil 11, or may be collectively provided in a plurality of the primary coils 11.

Furthermore, the filter circuit 230 is not limited to the T-type filter, and may be, for example, a band pass filter in which a coil and a capacitor are connected in series. The same applies to the filter circuit 420 of the vehicle 3.

Furthermore, in the power transmission device 10, a changeover switch that switches the primary coil 11 to be energized may be provided in each of the primary devices 13 when the inverter 220 is connected to the plurality of primary coils 11. The changeover switch may be provided in the management device 8 beside the road 4 or may be provided near each of the primary coils 11.

Furthermore, the transmission-side resonant circuit 240 is not limited to the configuration in which the primary coil 11 and the resonant capacitor are connected in series. The primary coil 11 and the resonant capacitor may be connected in parallel, or may be connected by a combination of a parallel connection and a series connection. In short, the transmission-side resonant circuit 240 only needs to be configured in such a manner that the resonance frequency of the transmission-side resonant circuit 240 matches the operating frequency of the inverter 220, and a connection relationship among the components is not specifically limited. The same applies to the reception-side resonant circuit 410 of the vehicle 3.

In addition, the operating frequency of the inverter 220 is not limited to 85 kHz, and may be a frequency around 85 kHz. In short, the operating frequency of the inverter 220 may be a predetermined frequency band including 85 kHz.

In addition, the power transmission device 10 may have a configuration in which a plurality of the inverters 220 is connected to an output-side power line (DC power line) of the PFC circuit 210.

In addition, the foreign object detection device 140 may be provided not only on the ground side but also on a side of the vehicle 3. For example, in a case where the foreign object detection device on the side of the vehicle 3 detects a foreign object, a living object, or the like present above the primary coil 11, the power feeding request can be stopped until the vehicle 3 passes through the primary coil 11.

In addition, in the wireless power transfer system 1, the information transmitted from the vehicle 3 to the supply device 5 by utilization of the narrow-area wireless communication includes the power feeding request, a fed power request value, and the like in addition to the vehicle identification information. The power feeding request is information indicating that a power transfer from the primary coil 11 is requested. The fed power request value is a requested value of an amount of the power transferred from a power feeding device 5 to the vehicle 3. The vehicle ECU 330 can calculate the fed power request value on the basis of an SOC of the battery 320.

In addition, the wireless power transfer system 1 can realize not only a method of feeding power from the ground to the vehicle 3 but also a method of feeding power from the vehicle 3 to the ground. In this case, the rectifier circuit 430 can be replaced with an inverter to realize rectification at the time of the power supply and power reception.

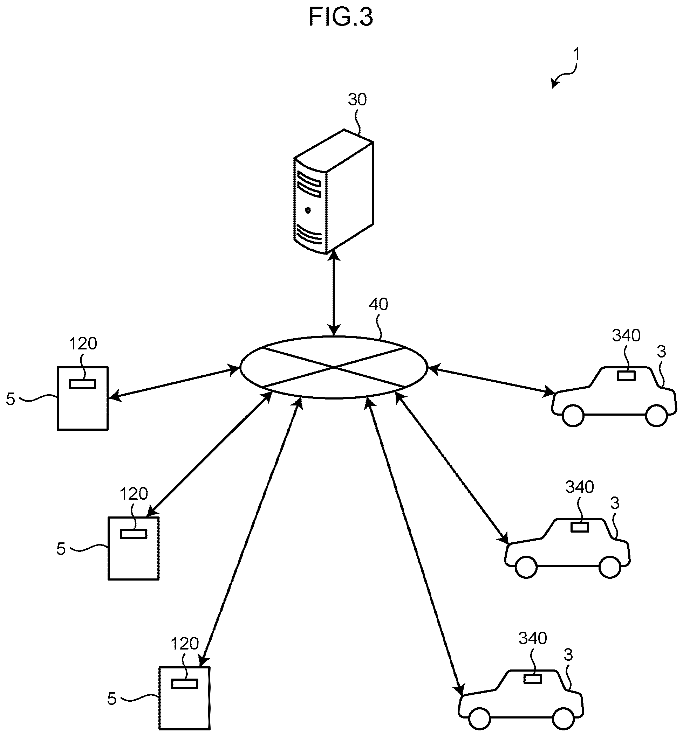

FIG. 3 is a schematic diagram for describing the wide-area wireless communication in the wireless power transfer system.

In the wireless power transfer system 1, the vehicle 3 can communicate with a server 30, and the supply device 5 can communicate with the server 30. The server 30 is connected to a network 40 and can communicate with a plurality of the vehicles 3 and a plurality of the supply devices 5 via the network 40. The network 40 includes a wide area network (WAN) that is a public communication network such as the Internet, a telephone communication network of a mobile phone, and the like.

The vehicle 3 is connected to the network 40 by the wide-area wireless communication using the third communication device 340. The vehicle 3 transmits information to the server 30 and receives information from the server 30.

The supply device 5 is connected to the network 40 by the wide-area wireless communication using the first communication device 120. The supply device 5 transmits information to the server 30 and receives information from the server 30.

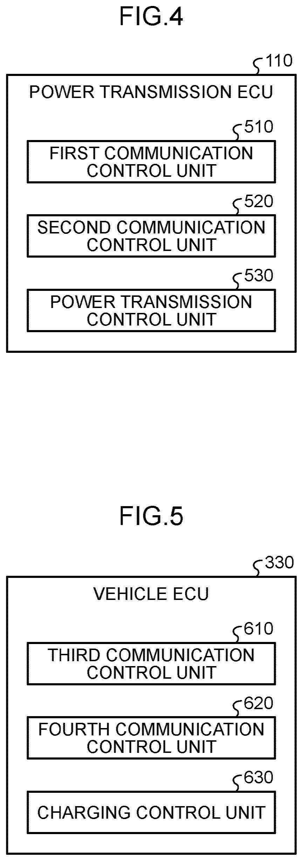

FIG. 4 is a block diagram illustrating a functional configuration of the power transmission ECU. The power transmission ECU 110 includes a first communication control unit 510, a second communication control unit 520, and a power transmission control unit 530.

The first communication control unit 510 executes first communication control of controlling the first communication device 120. The first communication control is to control the wide-area wireless communication on a side of the supply device 5, and controls communication of the supply device 5 using the first communication device 120. That is, the first communication control controls communication of the management device 8 in the supply device 5. The first communication control controls communication between the supply device 5 and the network 40 and also controls communication between the supply device 5 and the server 30 via the network 40. The first communication control unit 510 is a supply equipment communication controller (SECC).

The second communication control unit 520 executes second communication control of controlling the second communication device 130. The second communication control is to control the narrow-area wireless communication on the side of the supply device 5, and controls communication of the supply device 5 using the second communication device 130. That is, the second communication control controls communication of the segment 7 in the supply device 5. The second communication control controls communication between the supply device 5 and the vehicle 3 as communication not via the network 40. The second communication control unit 520 is a primary device communication controller (PDCC).

The power transmission control unit 530 executes power transmission control of controlling the power transmission device 10. The power transmission control controls power for power transmission, and controls a power supply unit 12 of the power transmission device 10. The power transmission control unit 530 executes power control of controlling the PFC circuit 210 and the inverter 220.

FIG. 5 is a block diagram illustrating a functional configuration of the vehicle ECU. The vehicle ECU 330 includes a third communication control unit 610, a fourth communication control unit 620, and a charging control unit 630.

The third communication control unit 610 executes third communication control of controlling the third communication device 340. The third communication control is to control the wide-area wireless communication on the side of the vehicle 3, and controls communication of the vehicle 3 using the third communication device 340. The third communication control controls communication between the vehicle 3 and the network 40 and also controls communication between the vehicle 3 and the server 30 via the network 40. The third communication control unit 610 is an EV communication controller (EVCC).

The fourth communication control unit 620 executes fourth communication control of controlling the fourth communication device 350. The fourth communication control is to control the narrow-area wireless communication on the side of the vehicle 3, and controls communication of the vehicle 3 using the fourth communication device 350. The fourth communication control controls communication between the vehicle 3 and the supply device 5 as communication not via the network 40. The fourth communication control unit 620 is a secondary device communication controller (SDCC).

The charging control unit 630 executes charging control of controlling the power reception device 20 and the charging relay 310. The charging control includes power control of controlling reception power in the secondary device 20, and relay control of controlling a connection state between the secondary device 22 and the battery 320. The charging control unit 630 executes power control of controlling the rectifier circuit 430. The charging control unit 630 executes relay control of switching an open/closed state of the charging relay 310.

In the wireless power transfer system 1 configured in such a manner, the wireless power transfer from the supply device 5 to the vehicle 3 is performed in a state in which the wireless communication is established between the vehicle 3 and the supply device 5. In a state in which the vehicle 3 and the supply device 5 are paired by the wireless communication, the power is transferred from the primary coil 11 on the ground side to the secondary coil 21 on the vehicle side in the non-contact manner. Then, in the vehicle 3, charging control of supplying the power received by the secondary coil 21 to the battery 320 is performed.

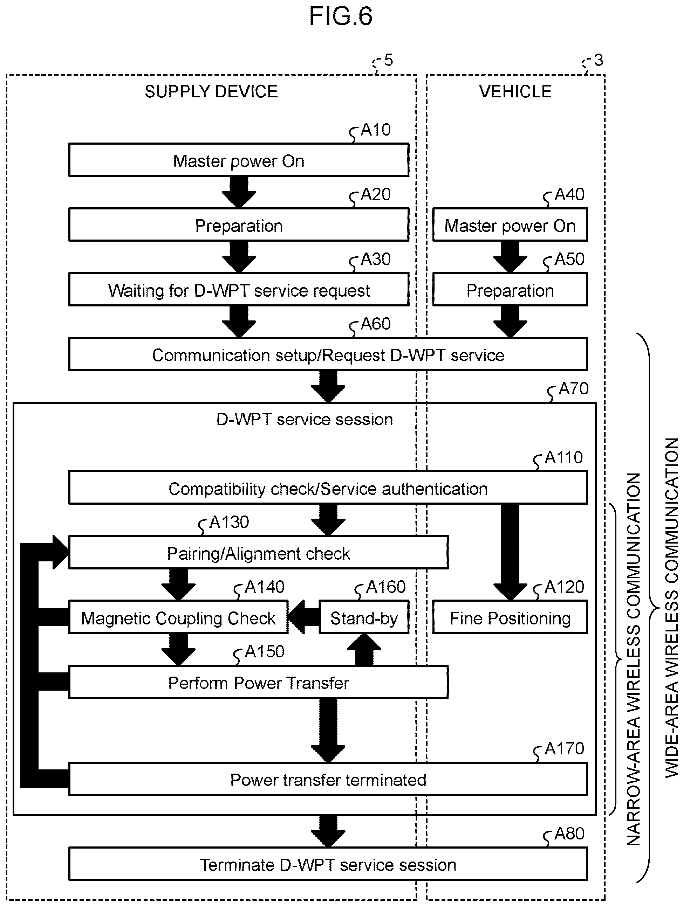

Next, a power transfer process (D-WPT process) will be described with reference to FIG. 6. A power transfer process is a process structured as a chain of a plurality of activities and derived from states and corresponding transitions.

FIG. 6 is a view for describing the power transfer process. In FIG. 6, basic activities for describing the power transfer process are illustrated. Thick arrows illustrated in FIG. 6 represent transition lines. A state of the wireless power transfer system 1 in the power transfer process is represented by the activities included in the power transfer process.

The activities included in the power transfer process include a power transfer service session (D-WPT service session A70) that is an activity in a stage of performing the power transfer, an activity in a stage before performing the power transfer, and an activity in a stage after performing the power transfer. Furthermore, the activities can be described with operation subjects being divided according to presence or absence of the communication between the supply device 5 and the vehicle 3. The activities are divided into what represents a state of only the side of the supply device 5 without communication, what represents a state of only the side of the vehicle 3 without communication, and what represents a state of both the supply device 5 and the vehicle 3 with communication.

As illustrated in FIG 6, the activities include a master power supply being in an ON state (Master power On) A10, preparation (Preparation) A20, waiting for a request from the vehicle 3 (Waiting for D-WPT service request) A30, the master power supply being in the ON state (Master power On) A40, preparation (Preparation) A50, setting communication (Communication setup) and requesting a D-WPT service (Request D-WPT service) A60, a D-WPT service session (D-WPT service session) A70, and a termination of the D-WPT service session (Terminate D-WPT service session) A80.

The preparation A20 is a preparation state of the supply device 5. In the preparation A20, the supply device 5 activates a circuit and confirms safety without communicating with the vehicle 3. When the master power supply is brought into the ON state A10, the supply device 5 transitions to the state of the preparation A20. Then, in a case where the supply device 5 activates the circuit and can confirm safety in the preparation A20, the state transitions to waiting for a request from the vehicle 3 (Waiting for D-WPT service request) A30. On the other hand, in a case where there is a problem in the supply device 5, the supply device 5 notifies the vehicle 3 of information indicating that the wireless power transfer system 1 cannot be used (unavailability notification) by the wide-area wireless communication. The first communication device 120 transmits the unavailability notification to the vehicle 3.

The preparation A50 is a preparation state of the vehicle 3. In the preparation A50, the vehicle 3 activates a circuit and confirms safety without communicating with the supply device 5. When the master power supply is brought into the ON state A40, the vehicle 3 transitions to the state of the preparation A50. Then, in a case where the vehicle 3 activates the circuit and can confirm safety in the preparation A50, the state transitions to setting communication (Communication setup) and requesting the D-WPT service (Request D-WPT service) A60. On the other hand, in a case where there is a problem in the vehicle 3, the vehicle 3 does not start the wide-area wireless communication and does not perform the subsequent sequence in the D-WPT process.

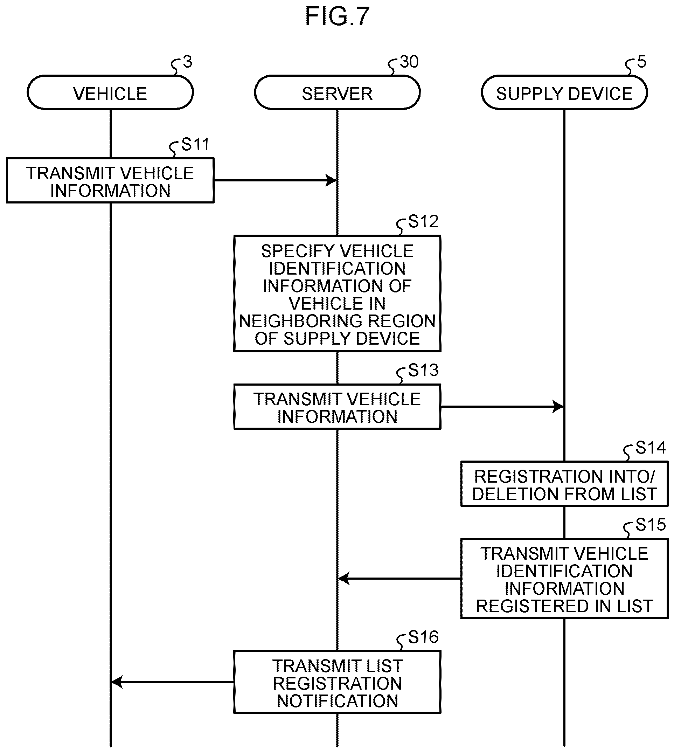

Setting communication and requesting the D-WPT service A60 is started by the vehicle ECU 330. In setting communication and requesting the D-WPT service A60, the vehicle ECU 330 starts the wide-area wireless communication. First, when the vehicle 3 transitions from the preparation A50 to setting communication and requesting the D-WPT service A60, the third communication device 340 transmits a request signal for the D-WPT service. The third communication device 340 performs the wireless communication with the first communication device 120 corresponding to the D-WPT lane that the vehicle 3 is scheduled to enter or has entered. The first communication device 120 to be a communication target is selected on the basis of a relative positional relationship between a current position of the vehicle 3 and a position of the D-WPT lane. On the side of the supply device 5, when the first communication device 120 receives the request signal for the D-WPT service in the state of waiting for the request from the vehicle 3 A30, the state transitions to setting communication and requesting the D-WPT service A60. Various kinds of information of the wide-area wireless communication and the P2PS communication are linked by utilization of the vehicle identification information. A processing sequence of setting communication and requesting the D-WPT service A60 is illustrated in FIG. 7.

FIG. 7 is a sequence diagram illustrating a case where communication using the wide-area wireless communication is performed between the vehicle and the supply device. The vehicle 3 transmits the vehicle information to the server 30 (Step S11). In Step S11, the third communication device 340 of the vehicle 3 transmits the vehicle information to the server 30. The vehicle information includes the vehicle identification information, various parameters of the power reception device 20, current position information of the vehicle 3, and requested power. The vehicle ECU 330 calculates the requested power on the basis of the state of charge (SOC) of the battery 320. In Step S11, the vehicle ECU 330 causes the third communication device 340 to transmit the vehicle information every predetermined time. The predetermined time is set according to a distance from the current position of the vehicle 3 to a starting point of the WPT lane. As the distance from the vehicle 3 to the starting point of the WPT lane becomes shorter, an interval of the predetermined time becomes shorter.

When receiving the vehicle information from the vehicle 3, the server 30 specifies the vehicle identification information of the vehicle 3 located in a neighboring region of the supply device 5 on the basis of the current position information of the vehicle 3 which current position information is included in the vehicle information (Step S12). In Step S12, the server 30 specifies the vehicle 3 located in a predetermined neighboring region from the supply device 5 on the basis of the current position information of the vehicle 3 and position information of the supply device 5. The neighboring region is set to, for example, a region within 500 meters.

When specifying the vehicle identification information of the vehicle 3, the server 30 transmits the vehicle information to the supply device 5 (Step S13). In Step S13, a transmission device of the server 30 transmits the vehicle information to the supply device 5.

When receiving the vehicle information from the server 30, the supply device 5 registers/deletes the vehicle identification information in/from an identification information list (Step S14). In Step S14, the power transmission ECU 110 registers/deletes the vehicle identification information in/from the identification information list in such a manner that the vehicle identification information associated with the vehicle information is registered in the identification information list without excess or deficiency.

After registering/deleting the vehicle identification information in/from the identification information list, the supply device 5 transmits the vehicle identification information registered in the identification information list to the server 30 (Step S15). In Step S15, the first communication device 120 of the supply device 5 transmits the vehicle identification information to the server 30.

Then, when receiving the vehicle identification information from the supply device 5, the server 30 transmits list registration notification to the vehicle 3 corresponding to the vehicle identification information registered in the identification information list (Step S16). In Step S16, a communication device of the server 30 transmits the list registration notification to the vehicle 3. The list registration notification is notification indicating that the vehicle identification information is registered in the identification information list, and includes identification information of the supply device 5 and the position information of the supply device 5.

As described above, when the vehicle 3 starts the wide-area wireless communication and both the supply device 5 and the vehicle 3 are in the state of setting communication and requesting the D-WPT service A60, the communication setting by the wide-area wireless communication is successful. With this successful communication setting, the state transitions to the D-WPT service session (D-WPT service session) A70.

FIG. 6 is referred to again. In the D-WPT service session A70, power is transferred from the transmission-side resonant circuit 240 of the supply device 5 to the reception-side resonant circuit 410 of the vehicle 3 in the non-contact manner in a state in which communication connection is established between the supply device 5 and the vehicle 3. The D-WPT service session A70 starts with the success of the communication setting and terminates by a termination of the communication. When the communication terminates in the state of the D-WPT service session A70, the state transitions to the termination of the D-WPT service session A80.

At the termination of the D-WPT service session A80, the vehicle 3 terminates the wide-area wireless communication with the supply device 5. The vehicle 3 and the supply device 5 can receive a trigger for terminating the D-WPT service session A70. Then, the vehicle ECU 330 prevents the D-WPT from being started for the secondary device 22 and the vehicle 3 until the third communication device 340 receives next notification (request signal for the D-WPT service).

Here, detailed activities of the D-WPT service session A70 will be described.

The D-WPT service session A70 includes a compatibility check (Compatibility check) and service authentication (Service authentication) A110, fine positioning (Fine Positioning) A120, pairing (Pairing) and an alignment check (Alignment check) A130, a magnetic coupling check (Magnetic Coupling Check) A140, execution of a power transfer (Perform Power Transfer) A150, standing by (Stand-by) A160, and a termination of the power transfer (Power transfer terminated) A170.

The compatibility check and service authentication A110 will be described. After the success of the communication setting, the vehicle ECU 330 and the power transmission ECU 110 confirm that the primary device 13 and the secondary device 22 are compatible. The compatibility check is performed on the side of the supply device 5 on the basis of the information associated with the vehicle identification information acquired by the communication. Check items include a minimum ground clearance of the secondary device 22, a shape type of the secondary device 410, circuit topology of the secondary device 22, a self-resonant frequency of the secondary device 22, the number of the secondary coils 21, and the like.

In the compatibility check and service authentication A110, first, the vehicle 3 transmits compatibility information of the power reception device 20 from the third communication device 340 to the supply device 5. The first communication device 120 of the supply device 5 receives the compatibility information of the power reception device 20 from the vehicle 3. Then, the first communication device 120 of the supply device 5 transmits compatibility information of the power transmission device 10 to the vehicle 3. The third communication device 340 of the vehicle 3 receives the compatibility information of the power transmission device 10 from the supply device 5.

Elements of the compatibility information transmitted by the vehicle 3 to the supply device 5 include the vehicle identification information, WPT power classes, an air gap class, WPT operating frequencies, a WPT frequency adjustment, a WPT type, WPT circuit topology, a fine positioning method, a pairing method, an alignment method, presence/absence information of a power adjustment function, and the like.

Elements of the compatibility information transmitted by the supply device 5 to the vehicle 3 include supply device identification information, WPT power classes, an air gap class, WPT operating frequencies, a WPT frequency adjustment, a WPT type, WPT circuit topology, a fine positioning method, a pairing method, an alignment method, presence/absence information of a power adjustment function, and the like.

Each element name will be described in detail. Each element of the compatibility information transmitted from the vehicle 3 to the supply device 5 will be described, and a description of what overlaps with the compatibility information transmitted from the vehicle 3 to the supply device 5 in the compatibility information transmitted from the supply device 5 to the vehicle 3 will be omitted.

The air gap class is information indicating an air gap class in which the secondary device 22 can receive power. The WPT power class is information indicating a power class in which the secondary device 22 can receive the power. The WPT operating frequencies are information indicating frequencies of the reception power received by the secondary device 22. The WPT frequency adjustment is information indicating whether the operating frequency can be adjusted. The WPT type is information indicating the shape type of the secondary device 22, and indicates a coil shape of the secondary coil 21. Examples of the WTP type include a circle and a solenoid. The WPT circuit topology is information indicating a connection structure between the secondary coil 21 and the resonant capacitor. As the WTP circuit topology, there are series and a parallel. The fine positioning method is information indicating how to perform alignment when performing the alignment. The pairing method is a method in which the vehicle 3 performs pairing of specifying the supply device 5. The alignment method indicates a method of relatively confirming positions of the secondary device 22 and the primary device 13 before starting the power transmission.

The fine positioning A120 will be described. The vehicle 3 performs the fine positioning A120 in the lateral direction of the vehicle prior to the pairing and alignment check A130 or in parallel with these activities. When determining that the vehicle 3 has approached or entered the region where the supply device 5 is installed (WPT lane), the vehicle ECU 330 starts the fine positioning A120 in the lateral direction of the vehicle.

The vehicle ECU 330 guides the vehicle 3 and aligns the primary device 13 and the secondary device 22 within a range in which sufficient magnetic coupling for the wireless power transfer is established.

The fine positioning A120 is basically performed on the side of the vehicle 3 manually or automatically. The fine positioning A120 can cooperate with an automated driving assistance system (ADAS).

Then, the activity of the fine positioning A120 continues until the vehicle 3 leaves the D-WPT charging site or the state changes to the termination of the communication, and can be executed on the basis of alignment information transmitted from the supply device 5 to the vehicle 3 by the wide-area wireless communication. The termination of the communication is the termination of the D-WPT service session A80.

The pairing and alignment check (Pairing/Alignment check) A130 will be described. Here, the pairing (Pairing) and the alignment check (Alignment check) will be separately described.

The pairing will be described. A P2PS interface that performs the narrow-area wireless communication ensures that the primary device 13 and the secondary device 22 are uniquely paired. A process of the pairing state is as follows.

First, the vehicle ECU 330 recognizes that the vehicle 3 has approached or entered the D-WPT lane. For example, the vehicle ECU 330 has map information including the D-WPT lane, and performs comparison with position information of the own vehicle, the position information being acquired by the GPS receiver 360, and recognizes the approach or entry according to a straight line distance or the like therebetween. The vehicle 3 transmits, to the server 30, which D-WPT lane the vehicle 3 approaches by the wide-area wireless communication. In short, the third communication device 340 notifies a cloud of a signal indicating that the vehicle 3 approaches any of the D-WPT lanes. Furthermore, in a case where the vehicle ECU 330 recognizes the approach or entry of the vehicle 3 to the D-WPT lane, the fourth communication device 350 starts transmitting a modulation signal at certain intervals for pairing of the primary device 13 and the secondary device 22.

In addition, the supply device 5 may recognize that the vehicle 3 has approached or entered the D-WPT lane by using the information acquired from the server 30 by the wide-area wireless communication. The server 30 allocates the vehicle identification information of the approaching vehicle 3 in each D-WPT lane to the supply device 5 corresponding to the lane. Since the supply device 5 only needs to refer to the vehicle identification information the number of pieces of which is reduced by the server 30, authentication processing can be performed in short time. In a case where the supply device 5 recognizes that the vehicle 3 is approaching the D-WPT lane, the second communication device 130 enters a stand-by mode. In the stand-by mode, waiting for reception of the modulation signal from the fourth communication device 350 of the vehicle 3 is performed. The modulation signal includes the vehicle identification information.

When the second communication device 130 receives the modulation signal from the vehicle 3, the supply device 5 compares the vehicle identification information received by the narrow-area wireless communication with the vehicle identification information in the identification information list acquired as a result of the wide-area wireless communication with a plurality of the vehicles 3 heading for the D-WPT lane. By this comparison, the supply device 5 identifies the vehicle 3.

When recognizing that the vehicle 3 is outside the D-WPT lane, the vehicle ECU 330 stops transmitting the modulation signal from the fourth communication device 350. The vehicle ECU 330 can determine whether the D-WPT lane is passed through on the basis of the map information and the position information of the own vehicle.

In a case of determining that the vehicle 3 is not traveling on the D-WPT lane or determining that the vehicle 3 is not approaching the D-WPT lane, the supply device 5 stops waiting for the modulation signal from the fourth communication device 350.

The pairing is executed on the primary device 13 until the vehicle 3 goes out of the D-WPT charging site or the state changes to the termination of the communication. When the pairing (Pairing) is completed, the state transitions to the alignment check (Alignment check).

The alignment check will be described. The alignment check is to confirm that a distance between the primary device 13 and the secondary device 22 in the lateral direction is within an acceptable range. The alignment check is performed by utilization of the narrow-area wireless communication (P2PS).

The alignment check is continuously executed on the basis of P2PS until the vehicle 3 leaves the D-WPT charging site or the state changes to the termination of the communication. A result of the alignment check can be transmitted from the first communication device 120 to the third communication device 340 by the wide-area wireless communication.

The magnetic coupling check A140 will be described. In the magnetic coupling check A140, the supply device 5 confirms a magnetic coupling state and confirms that the secondary device 22 is within an acceptable range. When the magnetic coupling check A140 terminates, the state transitions to the execution of the power transfer A150.

The execution of the power transfer A150 will be described. In this state, the supply device 5 performs the power transfer to the power reception device 20. The power transmission device 10 and the power reception device 20 need to have capability of controlling transfer power (transmission power and reception power) for usefulness of the MF-D-WPT and protection of the power reception device 20 and the battery 320. The larger power transfer helps to increase a traveling distance without static wireless charging and conductive charging of the power reception device 20. However, capacity of the battery 320 varies depending on a vehicle type of the vehicle 3, and an operating power demand may fluctuate rapidly. Examples of this rapid fluctuation include sudden regenerative braking. In a case where the regenerative braking is performed while the vehicle is traveling in the D-WPT lane, the regenerative braking is prioritized. Thus, the reception power from the power reception device 20 is supplied to the battery 320 in addition to regenerative power. In this case, it is necessary to adjust the transfer power by the power reception device 20 in order to protect the battery 320 from overcharge.

In this state, communication is not newly started between the supply device 5 and the power reception device 20 despite the necessity of the power control. This is because the communication may damage a response and accuracy in the power control due to its instability and latency. Thus, the supply device 5 and the power reception device 20 perform the power transfer and control thereof on the basis of known information up to this state.

The supply device 5 increases the transfer power of the magnetic coupling check in response to a power request transmitted from the third communication device 340 in advance by utilization of the wide-area wireless communication. The supply device 5 keeps current and voltage fluctuations within the range and tries to maximize the power transferred during the transition.

The power reception device 20 basically receives transmission power from the power transmission device 10 without performing any control. However, the power reception device 20 starts the control in a case where the transmission power exceeds or is about to exceed a limit such as rated power of the battery 320 which power fluctuates according to a state of charge or the operating power demand of the vehicle 3. In addition, the power control in the vehicle ECU 330 is also required to cope with malfunction in the wide-area wireless communication. This malfunction leads to a contradiction between a power control target in the primary device 13 and the request from the third communication device 340, and a sudden failure of the power reception device 20 or the battery 320 during the power transfer. The power reception device 20 controls the power transferred under a power request rate notified by the first communication device 120.

The power request is determined on the basis of compatibility check information such as the WPT circuit topology, geometry, ground clearance, and electromagnetic compatibility (EMC) of the vehicle 3 and the primary device 13. The magnetic field varies depending on these specifications, and it is necessary to transfer power within a range satisfying the EMC.

The power control in the power transmission ECU 110 and the power reception device 20 may interfere with each other. Specifically, in a case where the supply device 5 tries to realize a power request larger than the latest power limit in the power reception device 20 by the wide-area wireless communication, there is a possibility of the interference. An example of this is rapid regenerative control with a relatively small battery 320 in the vehicle 3. When possible, it is desirable that the supply device 5 can detect a mismatch between a power supply control target and the limit and adjust the power transfer in order to eliminate the mismatch.

For example, when the power transfer is interrupted for a short period while the secondary device 22 is still on the primary device 13, for example, in a case where a foreign object on the primary device 13 is detected by the foreign object detection device 140 or in a case where the magnetic coupling is reduced due to misalignment of the secondary device 22, the state transitions to the standing by (Stand-by) A160. Note that in a case where the foreign object detection device is provided in the vehicle 3, the foreign object may be detected on the side of the vehicle 3.

When the secondary device 22 passes over the primary device 13, the state transitions to the termination of the power transfer A170. In this case, since the magnetic coupling between the two devices is weakened, the transferred power is reduced. Since the supply device 5 can detect that the magnetic coupling is weakened by monitoring the transfer power, the supply device 5 basically determines the state transition to the termination of the power transfer A170 and then starts lowering the voltage to stop the power transfer.

The standing by A160 will be described. In this state, when the power transfer is interrupted for short time for some reason and both the vehicle 3 and the supply device 5 are ready for the D-WPT, the state returns to the execution of the power transfer A150. In a case where there is a possibility that the power transfer is interrupted, the state becomes the standing by A160.

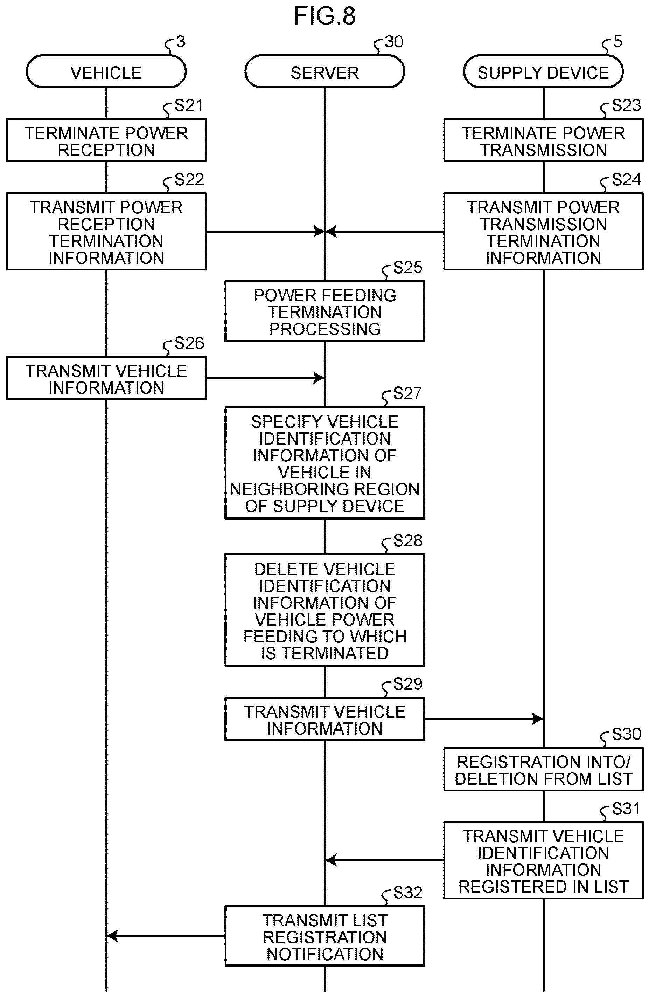

The termination of the power transfer A170 will be described. In this state, the supply device 5 reduces the transferred power to zero, and holds or uploads power transfer result data such as total transfer power, power transfer efficiency, and a failure history. Each piece of data is tagged with the vehicle identification information. Finally, the supply device 5 deletes the vehicle identification information of the vehicle 3 that has passed through the D-WPT lane. Thus, the supply device 5 can prepare for the pairing and the power transfer to be performed on another vehicle thereafter. A processing sequence of the termination of the power transfer A170 is illustrated in FIG. 8.

FIG. 8 is a sequence diagram illustrating an operation after the power feeding from the supply device to the vehicle during traveling is terminated. When the power reception from the supply device 5 terminates in the power reception device 20 of the vehicle 3 (Step S21), the vehicle 3 transmits power reception termination information to the server 30 (Step S22). In Step S22, the power reception termination information is transmitted from the third communication device 340 of the vehicle 3. The power reception termination information includes, for example, the vehicle identification information of the vehicle 3, the reception power from the supply device 5, power reception efficiency, and an abnormality detection result as information related to the power reception from the supply device 5.

When the processing of Step S21 is performed, the supply device 5 terminates the power transmission to the vehicle 3 (Step S23). The processing in Step S21 and the processing in Step S23 may or may not be performed simultaneously. When the processing of Step S23 is performed, the supply device 5 transmits power transmission termination information to the server 30 (Step S24). In Step S24, the power transmission termination information is transmitted from the first communication device 120 of the supply device 5.

When receiving the power reception termination information from the vehicle 3 and receiving the power transmission termination information from the supply device 5, the server 30 performs power feeding termination processing of terminating the power feeding from the supply device 5 to the vehicle 3 (Step S25). In the power feeding termination processing, on the basis of the power reception termination information and the power transmission termination information, processing of calculating a power supply amount from the supply device 5 to the vehicle 3 and processing of charging a user of the vehicle 3 which processing is based on the calculated power supply amount are performed.

Furthermore, the vehicle 3 transmits the vehicle information to the server 30 regardless of the power feeding termination processing (Step S26). In Step S26, the vehicle information is transmitted from the third communication device 340 of the vehicle 3.

When receiving the vehicle information from the vehicle 3 after performing the power feeding termination processing, the server 30 specifies the vehicle identification information of the vehicle 3 located in the neighboring region of each supply device 5 on the basis of the vehicle information (Step S27).

Then, when the power feeding termination processing to a certain vehicle 3 has already been performed in a certain supply device 5, the server 30 deletes the vehicle identification information of the vehicle 3, in which the power feeding termination processing has already been performed, from the vehicle identification information of the vehicle 3 in the neighboring region of the certain supply device 5 specified in the processing of Step S27 (Step S28).

Then, the server 30 transmits, to each supply device 5, the vehicle information associated with the vehicle identification information not deleted in the processing of Step S28 in the vehicle identification information of the vehicle 3 specified to be located in the neighboring region of each supply device 5 (Step S29).

After the vehicle information is transmitted to each supply device 5 in the processing of Step S29, when the supply device 5 receives the vehicle information from the server 30, the supply device 5 registers/deletes the vehicle identification information in/from the identification information list (Step S30). The processing in Step S30 is similar to the processing in Step S14 in FIG. 7. Then, the supply device 5 transmits the vehicle identification information registered in the identification information list to the server 30 (Step S31). The processing in Step S31 is similar to the processing in Step S15 in FIG. 7.

Then, when receiving the vehicle identification information from the supply device 5, the server 30 transmits the list registration notification to the vehicle 3 corresponding to the vehicle identification information registered in the identification information list (Step S32). The processing in Step S32 is similar to the processing in Step S16 in FIG. 7.

As a result, in a case where the processing illustrated in FIG. 8 is performed, the vehicle identification information of the vehicle 3 which is located in the neighboring region of each supply device 5, the power feeding from the supply device 5 not being terminated, and a deletion request for the vehicle identification information of which is not made is registered in the identification information list. In a case where the vehicle identification information of the vehicle 3 is registered in the identification information list of any of supply devices 2, the vehicle 3 receives the list registration notification. Thus, the vehicle ECU 330 can determine that the own vehicle is registered in any of the supply devices 5 by receiving the list registration notification. Then, in a case where the vehicle 3 goes out of the neighboring region of the supply device 5, the vehicle identification information of the vehicle 3 is deleted from the identification information list of the supply device 5.

FIG. 6 is referred to again. In addition, at the termination of the power transfer A170, the power reception device 20 does not need to do anything to make the transfer power zero. The P2PS interface is kept active when the vehicle 3 is in the D-WPT lane, and the state of the power reception device 20 automatically transitions to the pairing for a power transfer from a next primary device 13. As indicated by the transition line illustrated in FIG. 6, the state transitions from the termination of the power transfer A170 to the pairing and alignment check A130. As illustrated in FIG. 6, when a predetermined transition condition is satisfied, it is possible to transition from the magnetic coupling check A140 to the pairing and alignment check A130 and transition from the execution of the power transfer A150 to the pairing and alignment check A130. The pairing may be individually performed on a plurality of the primary coils 11, or the plurality of primary coils 11 may be bundled and the pairing may be performed at a representative point.

Then, in a case where there is no D-WPT request from the vehicle ECU 330, or in a case where a series of states from setting communication and requesting the D-WPT service A60 to the termination of the power transfer A170 is prohibited, the D-WPT service session A70 transitions to the termination of the D-WPT service session A80 and stops the wide-area wireless communication between the first communication device 120 and the third communication device 340. For example, the D-WPT stops when a state of charge in the battery 320 is too high or when the power reception device 20 is too hot due to the continuous power transfer. Such an unnecessary D-WPT can be disabled simply by deactivation of the P2PS interface. However, by stopping the wide-area wireless communication, the power transmission ECU 110 can release a memory occupied for the vehicle 3 by terminating the established wide-area wireless communication without requiring the D-WPT.

In addition, the D-WPT service session A70 is not limited to transition in a manner of the transition line illustrated in FIG. 6. In the D-WPT service session A70, when the activity in and after the pairing and alignment check A130 terminates, in a case where a condition that the power transfer process stays in the D-WPT service session A70 is satisfied, transition is performed not to the termination of the D-WPT service session A80 but to the compatibility check and service authentication A110. For example, in a case where a predetermined transition condition is satisfied in the state of the magnetic coupling check A140, the state can transition to the compatibility check and service authentication A110.

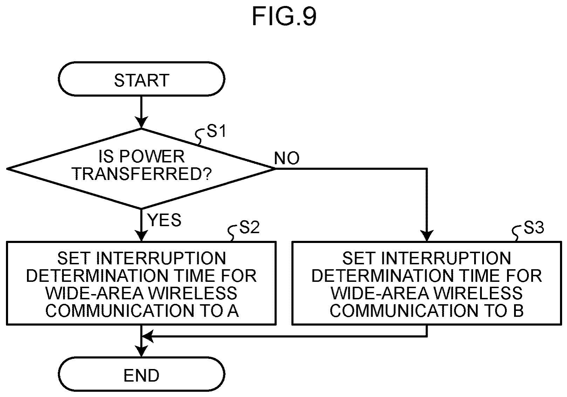

FIG. 9 is a flowchart illustrating processing executed by the control device. The supply equipment 2 as a control device determines whether the power is transferred from the supply equipment 2 to the vehicle 3.

In a case where it is determined that the supply equipment 2 transfers power (Step S1: Yes), the supply equipment 2 sets interruption determination time for determining that the communication of the wide-area wireless communication via the network 40 is interrupted to time A (Step S2), and terminates the series of processing.

On the other hand, in a case it is determined that the supply equipment 2 does not transfer power (Step S1: No), the supply equipment 2 sets the interruption determination time to time B (Step S3), and terminates the series of processing. Here, the time A is shorter than the time B. In other words, in a case where it is determined that power is transferred from the supply equipment 2 to the vehicle 3, the supply equipment 2 sets the interruption determination time to be shorter than that of a case where the power is not transferred.

According to the control device described above, the interruption determination time is set to the time A in a state in which the power is transferred from the supply equipment 2 to the vehicle 3 (execution of the power transfer A150 in FIG. 6). Thus, the interruption of the wide-area wireless communication can be promptly detected. Furthermore, in a state in which the power is not transferred from the supply equipment 2 to the vehicle 3, the interruption determination time is set to the time B. Thus, a load of the wide-area wireless communication can be reduced.

Note that in a case where the supply equipment 2 determines that the vehicle 3 and the supply equipment 2 are performing the narrow-area wireless communication, the supply equipment 2 may set the interruption determination time to be shorter than that of a case where the narrow-area wireless communication is not performed. In this case, in a state in which the vehicle 3 and the supply equipment 2 are performing the narrow-area wireless communication (series of states from the pairing and alignment check A130 to the termination of the power transfer A170 in FIG. 6), the interruption determination time is set to the time A. Thus, the interruption of the wide-area wireless communication can be promptly detected. Furthermore, in a state in which the vehicle 3 and the supply equipment 2 are not performing the narrow-area wireless communication, the interruption determination time is set to the time B. Thus, it is possible to reduce the load of the wide-area wireless communication.

In a case of determining that the pairing of the narrow-area wireless communication between the vehicle 3 and the supply equipment 2 is completed, the supply equipment 2 may set the interruption determination time to be shorter than that of a case where the pairing of the narrow-area wireless communication is not completed. In this case, in a state in which the pairing of the narrow-area wireless communication between the vehicle 3 and the supply equipment 2 is completed (state in and after the pairing and the alignment check A130 in FIG. 6), the interruption determination time is set to the time A. Thus, the interruption of the wide-area wireless communication can be promptly detected. Furthermore, in a state in which the pairing of the narrow-area wireless communication between the vehicle 3 and the supply equipment 2 is not completed, the interruption determination time is set to the time B. Thus, the load of the wide-area wireless communication can be reduced.

In addition, in a case where the supply equipment 2 determines that the power transfer service session that is the activity in the stage of performing the power transfer is started, the supply equipment 2 may set the interruption determination time to be shorter than that of a case where the power transfer service session is not started. In this case, in a state in which the power transfer service session that is the activity in the stage of performing the power transfer is started (state in and after the D-WPT service session A70 in FIG. 6), the interruption determination time is set to the time A. Thus, the interruption of the wide-area wireless communication can be promptly detected. Furthermore, in a state in which the power transfer service session that is the activity in the stage of performing the power transfer is not started, the interruption determination time is set to the time B. Thus, the load of the wide-area wireless communication can be reduced.

In addition, in a case of determining that the distance between the vehicle 3 and the supply equipment 2 is equal to or less than a threshold on the basis of the position information of the vehicle, the supply equipment 2 may set the interruption determination time to be shorter than that of a case where the distance between the vehicle 3 and the supply equipment 2 is larger than the threshold. In this case, when the distance between the vehicle 3 and the supply equipment 2 approaches the threshold or less, the interruption determination time is set to the time A. Thus, the interruption of the wide-area wireless communication can be promptly detected. Furthermore, when the distance between the vehicle 3 and the supply equipment 2 is larger than the threshold, the interruption determination time is set to the time B. Thus, the load of the wide-area wireless communication can be reduced.

Furthermore, the control device may be the vehicle 3 or the server 30. In other words, in the vehicle 3 or the server 30, it may be determined whether the power is transferred from the supply equipment 2 to the vehicle 3, and the interruption determination time may be set to be short in a case where it is determined that the power is transferred.

Further effects and modification examples can be easily derived by those skilled in the art. Broader aspects of the present disclosure are not limited by the specific details and representative embodiment that are illustrated and described in the above manner. Thus, various modifications can be made without departing from the sprit or scope of a general concept of the disclosure defined by the accompanying claims and an equivalent thereof.

### Reference Signs List

- 1: WIRELESS POWER TRANSFER SYSTEM
- 2: SUPPLY EQUIPMENT
- 3: VEHICLE
- 4: ROAD
- 5: SUPPLY DEVICE
- 6: AC POWER SUPPLY
- 10: POWER TRANSMISSION DEVICE
- 11: PRIMARY COIL
- 20: POWER RECEPTION DEVICE
- 21: SECONDARY COIL

## Claims

1. A control device in a wireless power transfer system that transfers power from supply equipment to a traveling vehicle in a non-contact manner by using narrow-area wireless communication and wide-area wireless communication, the control device comprising:
a processor configured to set interruption determination time for determining that communication of the wide-area wireless communication is interrupted when determining that a distance between the vehicle and the supply equipment is equal to or less than a threshold to be shorter than the interruption determination time when determining that the distance between the vehicle and the supply equipment is longer than the threshold, on a basis of position information of the vehicle.

2. The control device according to claim 1, wherein the processor sets the interruption determination time when determining that a power transfer service session that is an activity in a stage of performing a power transfer is started to be shorter than the interruption determination time when determining that the power transfer service session is not started.

3. The control device according to claim 1, wherein the processor sets the interruption determination time when determining that pairing of the narrow-area wireless communication between the vehicle and the supply equipment is completed to be shorter than the interruption determination time in a case where the pairing of the narrow-area wireless communication is not completed.

4. The control device according to claim 1, wherein the processor sets the interruption determination time when determining that the vehicle and the supply equipment are performing the narrow-area wireless communication to be shorter than the interruption determination time when determining that the narrow-area wireless communication is not performed.

5. The control device according to claim 1, wherein the processor sets the interruption determination time when determining that the power is transferred from the supply equipment to the vehicle to be shorter than the interruption determination time when determining that the power is not transferred.
